# EUROPEAN PATENT SPECIFICATION

(11) **EP 3 988 388 B1**
(45) Date of publication and mention of the grant of the patent: **23.07.2025**
(21) Application number: 21203687.5
(22) Date of filing: 20.10.2021
(51) Int. Cl.: B60N 2/68, B64D 11/06

(54) **A SEATBACK FOR A VEHICLE SEAT**
RÜCKENLEHNE FÜR EINEN FAHRZEUGSITZ
DOSSIER POUR UN SIÈGE DE VÉHICULE

(30) Priority: 23.10.2020 US 202063104904 P
(43) Date of publication of application: 27.04.2022
(73) Proprietor: Adient Aerospace, LLC, Bothell, WA 98011 (US)
(72) Inventor: Eaton, Thomas Rodolph, Bothell, 98011 (US)
(74) Representative: Arnold & Siedsma

(56) References cited:
- EP-A2- 0 734 901
- EP-A2- 1 260 433
- EP-B1- 2 013 861
- WO-A1-99/04381
- WO-A2-2007/106857
- US-A1- 2005 110 310
- US-A1- 2016 325 694
- US-A1- 2019 217 784
- US-B1- 6 199 948
- US-B1- 9 695 972

## Description

### BACKGROUND

The present disclosure relates generally to a seatback for a vehicle seat, in particular an aircraft seat and to a vehicle seat having such a seatback.

Seatbacks of vehicle seats are known in various variants. For example, common seatbacks for an economy aircraft seats comprise an item holding structure, such as a pocket, and a display for use of a passenger seated behind.

US 9 695 972 B1, according to its abstract, concerns a quick-release mounting system for mounting a panel instrument, such as a video monitor, to a mounting surface or support, such as a seatback or other structure. The mounting system comprises one or more mounting mechanisms configured to be mounted to the mounting surface or support. Each mounting mechanism has a locking member coupled to a first main body. The locking member is movable between a locked position in which the locking bolt engages a retaining stud mounted to the back surface of the panel instrument thereby locking the mounting mechanism to the first retaining stud and an unlocked position in which the locking member is disengaged from the first retaining stud. The mounting mechanism also has a cam shaft having a cam fixed in rotation with the cam shaft. The cam is operably coupled to the locking member such that rotation of the cam shaft moves the locking member between the locked and unlocked positions.

US 2005/0110310 A1, according to its abstract, concerns a seating arrangement for a motor vehicle having at least one front vehicle seat and at least one rear vehicle seat in which the front vehicle seat has a backrest provided at a backrest frame as a unit which can be attached at least indirectly on the backside of the seat back and receives the headrest. A display screen or monitor can be mounted in that frame in a field or space specifically provided for that unit.

US 2019/0217784 A1, according to its abstract, concerns a vehicle seating assembly including a seatback. The seat-back includes a rear portion and a substantially horizontal strap including first and second ends fixed to the rear portion. The substantially horizontal strap further includes an intermediate attachment area fixed to the rear portion between the first and second ends.

EP 0 734 901 A2, according to its abstract, states a vehicle seat having an integrated booster seat in which a child booster seat cushion is disposed within a cavity in the seat back and is rotatable to a forward extending use position spaced above the seat cushion providing a raised booster seat cushion for a child to elevate the child to a position in which an adult restraint system can be used with the child. The seat back has a movable panel which covers the cavity in the seat back in which the booster seat cushion is stored. Once the booster seat cushion has been moved to its use position, the panel is returned to its closed position whereby the panel forms the seat back surface for both an adult and a child. The booster seat can be provided in a form of a removable module which can be removed from the seat back and replaced with another module containing unique features such as an integral child seat or an armrest module.

US 2016/0325694 A1, according to its abstract, states a door assembly for a vehicle interior opening includes a track extending in an imperfect arc and a door supported by the track and slidable therealong through the imperfect arc. The door comprises a single piece, flexible body, having a plurality of crests defining generally planar surfaces extending parallel to each other in a lateral direction. The crests are joined together by respective ones of a plurality of troughs coupled therebetween.

US 6 199 948 B1, according to its abstract, concerns a seat assembly of a vehicle capable of receiving and retaining an interchangeable module. The seat assembly includes a seat bottom, a seat back, and a module receiver. The module receiver is secured to either the seat bottom or the seat back and includes a coupling device to retain the module which is received in the module receiver.

EP 2 013 861 B1, according to its abstract, states a display system for a vehicle seat comprises a receiving surface including a recess. A cover plate is adapted to cover and/or fit into the recess. The recess has a support surface and a slot for receiving a tab located on the cover plate. An information carrier can be located between the cover plate and the support surface.

WO 99/04381 A1, according to its abstract, states advertising display panels for attachment to supports are described. The supports may be in passenger vehicle interiors, particularly aircraft, and embodiments are described wherein display panels are releasably fixed to seat backs. The displayed material may be printed matter, or the panel may include a screen to display still or moving graphical images or text. The panels may require a release tool for removal from the seat backs. To preserve neatness of cabin decor, the panels may be positioned so as to be concealed by tray tables attached to the seats and foldable to overlie an area of the seat back, when the tables are folded.

EP 1 260 433 A2, according to its abstract, states the flap tray (16) attachable to the rear (14) of aircraft or vehicle seats is provided with a recess which serves for accommodation of a transparent plate insert (30), and is provided at least on its two opposing edges with dovetail-shaped undercuts for holding the insert securely in place.

WO 2007/106857 A2, according to its abstract, states a meal tray for a passenger seat includes a removable insert. The insert carries a sheet of graphics or advertisements in a protected, viewable position when the meal tray is stowed. Tamper-resistant latches secure the insert to the meal tray.

### SUMMARY

A seatback for an aircraft seat according to independent claim 1 is provided. Optional features are recited in the dependent claims.

Examples herein provide an improved seatback for a vehicle seat, in particular an aircraft seat, which is individually customizable according to airline decorative colors and requested, required or desired supplemental features to raise a passenger comfort feeling and safety. Further, examples provide an improved vehicle seat, in particular an aircraft seat.

Examples provide a seatback for a vehicle seat, in particular an aircraft seat, comprising a seatback structure which has a rear side having a partially circumferential outer edge and a recess which is partially surrounded by the outer edge and a panel at least partially arranged within the recess and at least partially covered by the outer edge. The panel is detachably retained to and/or in the recess and is configured as an interchangeable and customized part.

The panel is configured as a decorative panel to increase an optical appearance to passengers and as an interchangeable, adaptable and customizable part without the need of producing a new seatback with adapted features and replacement of the seatback. The panel is detachable in a fast and simple manner. The same seatback can be used with no limitation of creativity in view of its rear side appearance. Once the seatback is installed, customization of the rear side appearance is not limited to any specific design. The panel may be produced in a later stage and installed when fully customized as desired by an airline. It is to be understood that the seatback may be used in trains, cars, busses and other passenger transport vehicles. The panel is e.g. a cover element for a rear of a seatback and/or a seatback support element and/or a holding element with receptacles to hold items e.g. of the airline and/or of the passenger. The term panel will be continued under the term decorative panel.

For example, the decorative panel is e.g. made of thermoplastic and lightweight material.

For example, the decorative panel is detachably retained to and/or in the recess at least in one of a form-fitting and/or force-fitting manner. For example, the decorative panel is detachably retained to and/or in the outer edge at least in one of a form-fitting and/or force-fitting manner. The decorative panel is detachably retained on the seatback rear side via a fastening system comprising detachable attachment elements such as clips, hooks, pins, screws, magnets or the like. In particular, an assembly, in particular attachment, and disassembly, in particular removal, of the decorative panels require no tools. The recess on the rear side of the seatback is configured as a seatback cove. The seatback cove can be used as a carrier of loose items like amenity kits.

For example, the outer edge is arranged on a circumference of the seatback structure and projecting substantially perpendicular away from a rear side surface of the seatback structure.

For example, the decorative panel comprises at least one attachment element which is detachably retained in at least one of the recess and/or the outer edge. In a mounted state of the decorative panel, the decorative panel is keyed and/or plugged into place within the recess. For example, attachment elements may be tabs, flaps, flanges, clips, hooks, pins/bolts or the like arranged around a perimeter of the decorative panel to key into receiving elements provided by the rear side of the seatback structure. The receiving elements may be slots, holes, rings or the like.

For example, the attachment element protrudes from an outer circumference of the decorative panel in a direction towards the recess and/or the outer edge of the seatback structure.

For example, the decorative panel comprises a main panel body.

For example, the main panel body comprises at least one of a printed decorative cover and supplemental elements for passenger's use. Supplemental elements may be bonded or incorporated into a printing process of the decorative panel. For example, supplemental elements comprise at least a safety card, an advertisement, airline and destination information or the like. Further, the decorative panel is configured as a carrier having a number of supplemental elements in form of retaining openings to retain loose usable items such as amenity kits provided by the airline for the passenger. Further, the decorative panel may comprise retaining openings to be used by the passenger to store own items. Furthermore, supplemental elements may be one of a safety element such as an additional foam layer or the like.

For example, the decorative panel comprises a circumferential outer area bent in a direction away from the main panel body at least partially corresponding to the outer edge of the seatback structure.

For example, the seatback structure comprises an intermediate shell arranged in the recess between a rear side surface and the decorative panel. The intermediate shell may be detachably attached to and/or in the recess. The intermediate shell may comprise additional retaining elements to support and retain the decorative panel within the seatback recess.

For example, the seatback structure comprises a support element which is detachably attached to the rear side of the seatback structure and which is arranged extending between lateral sides of the seatback structure. The support element may be configured as a bar. The support element may comprise a number of fixation elements to additionally fix the decorative panel in and/or to the recess. The support element is arranged on a lower or bottom side of the decorative panel such that the decorative panel cannot drop out of the recess in a vertical direction. Further, the support element may comprise a number of supplemental features such as storage compartments for magazines and/or outlets for mobile devices, power sockets or the like.

For example, the rear side comprises at least an attachment device with at least one receiving element arranged in the recess and/or in the outer edge of the seatback structure. The at least one attachment device is arranged in an area of the recess.

For example, the attachment device is arranged on an inner circumference of the outer edge of the seatback structure. Alternatively or additionally, an attachment device is arranged in the recess e.g. on a rear side surface.

For example, the decorative panel comprises at least one attachment element which is detachably retained in the receiving element in a mounted state of the decorative panel at the rear side of the seatback structure.

Further according to the disclosure, a vehicle seat, in particular an aircraft seat, comprises at least a seat pan and a seatback as disclosed above.

### BRIEF DESCRIPTION OF THE DRAWINGS

The present disclosure will become more fully understood from the detailed description given herein below and the accompanying drawings which are given by way of illustration only, and thus, are not limitative of the present disclosure, wherein:
Figure 1 shows in a perspective view an example of a vehicle seat, in particular an aircraft seat, with a seatback and a number of interchangeable decorative panels,
Figure 2 shows in a perspective view an example of an assembly step of a seatback having a decorative panel mounted on a rear side of the seatback, and
Figures 3A and 3B show in perspective views examples of a seatback having different customized decorative panels.

Corresponding parts are marked with the same reference symbols in all figures.

### DETAILED DESCRIPTION

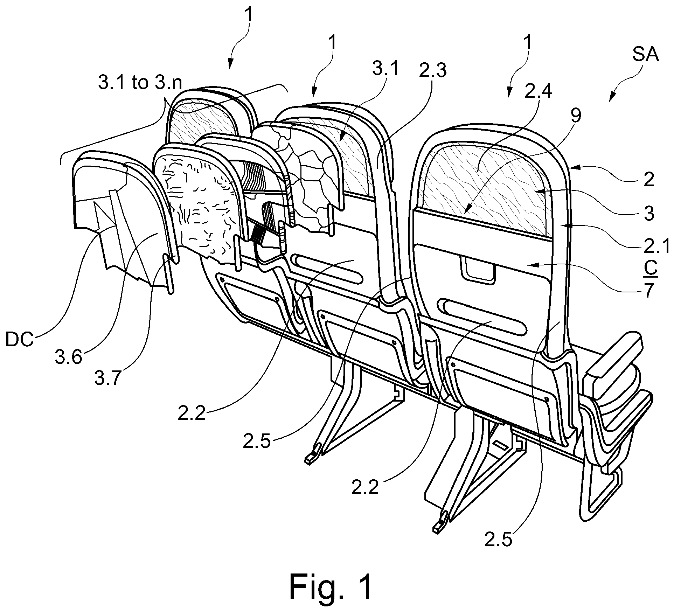

**Figure 1** shows in a perspective view an example of a vehicle seat 1, in particular an aircraft seat, with a seatback 2 and a number of interchangeable decorative panels 3.1 to 3.n. In particular, **figure 1** shows a seating arrangement SA comprising three seats 1 arranged next to each other. For example, the seating arrangement SA is arranged within a vehicle cabin C, such as an aircraft economy cabin.

The seatback 2 comprises a seatback structure 2.1 which has a rear side 2.2 having a partially circumferential outer edge 2.3 and a recess 2.4 which is partially surrounded by the outer edge 2.3. In a mounted state of one of the decorative panels 3.1 to 3.n, the mounted decorative panel 3.1 to 3.n is at least partially arranged within the recess 2.4 and at least partially covered by the outer edge 2.3. The outer edge 2.3 is at least partially arranged around a perimeter of the decorative panel 3.1 to 3.n in the mounted state. The mounted decorative panel 3.1 to 3.n is detachably retained to and/or in the recess 2.4 and is configured as an interchangeable and customized part. Each decorative panel 3.1 to 3.n may differ from one another by their color, material, supplemental features or the like. Each decorative panel 3.1 to 3.n may be a customized part. For example, the decorative panels 3.1 to 3.n are substantially T-shaped.

For example, one of the decorative panels 3.1 to 3.n or all decorative panels 3.1 to 3.n is/are made of thermoplastic and lightweight material.

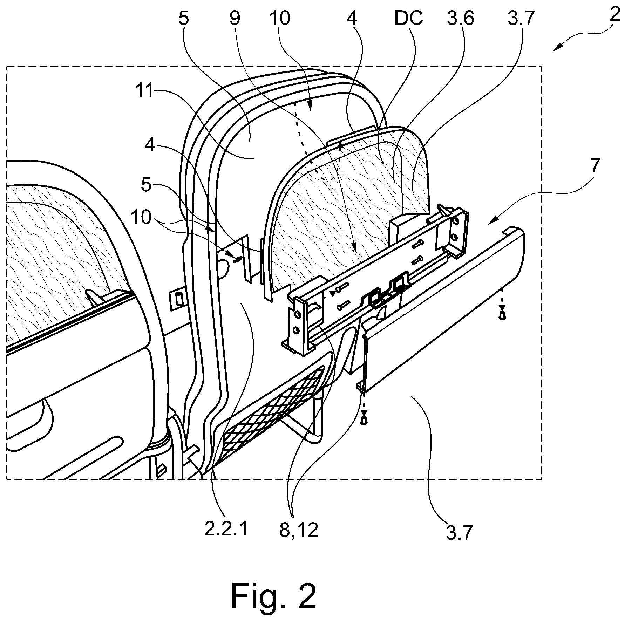

For example, the mounted decorative panel 3.1 to 3.n is detachably retained to and/or in the recess 2.4 at least in one of a form-fitting and/or force-fitting manner. Additionally or optionally, the mounted decorative panel 3.1 to 3.n is detachably retained to and/or in the outer edge 2.3 at least in one of a form-fitting and/or force-fitting manner. The mounted decorative panel 3.1 to 3.n is detachably retained on the seatback rear side 2.2 via a fastening system comprising detachable attachment elements 4, as shown in **figure 2****.** The attachment elements 4 may be clips, hooks, pins, screws, magnets or the like. In particular, an assembly, in particular attachment, and disassembly, in particular removal, of the decorative panels 3.1 to 3.n require no tools. The recess 2.4 on the rear side 2.2 of the seatback 2 is configured as a seatback cove. The seatback cove can be used as a carrier of loose items like amenity kits.

The outer edge 2.3 is arranged on a circumference of the seatback structure 2.1 and projecting substantially perpendicular away from a rear side surface 2.2.1 which is visible in **figure 2** of the seatback structure 2.1.

The decorative panels 3.1 to 3.n each comprise a number of attachment elements 4. In the mounted state of one of the decorative panels 3.1 to 3.n, the mounted decorative panel 3.1 to 3.n is detachably retained in at least one of the recess 2.4 and/or the outer edge 2.3 via the attachment elements 4. In particular, the attachment elements 4 are in detachable engagement with a counterpart arranged in the recess 2.4 and/or the outer edge 2.3. In a mounted state of one of the decorative panels 3.1 to 3.n, the mounted decorative panel 3.1 to 3.n is keyed and/or plugged into place within the recess 2.4. For example, attachment elements 4 may be tabs, flaps, flanges, clips, hooks, pins/bolts or the like arranged around a perimeter of each of the decorative panels 3.1 to 3.n to key into receiving elements 5, as shown in **figure 2****,** provided on the rear side 2.2 of the seatback structure 2.1. The receiving elements 5 may be slots, holes, rings or the like. It is to be understood that the decorative panels 3.1 to 3.n may comprise receiving elements 5 which correspond to attachment elements 4 formed on the rear side 2.2 of the seatback structure 2.1.

The attachment elements 4 protrude from an outer circumference of the decorative panels 3.1 to 3.n in a direction towards the recess 2.4 and/or the outer edge 2.3 of the seatback structure 2.1.

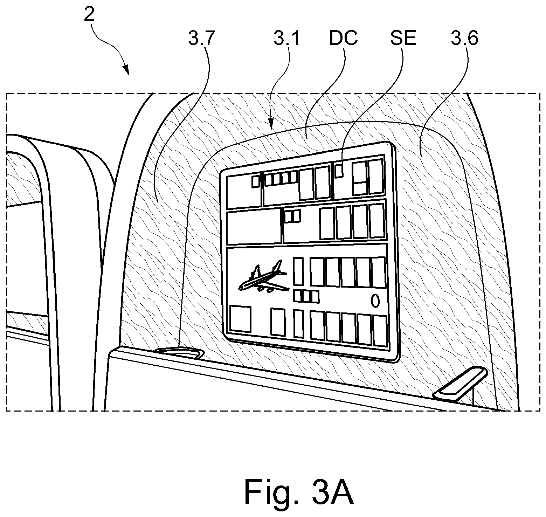

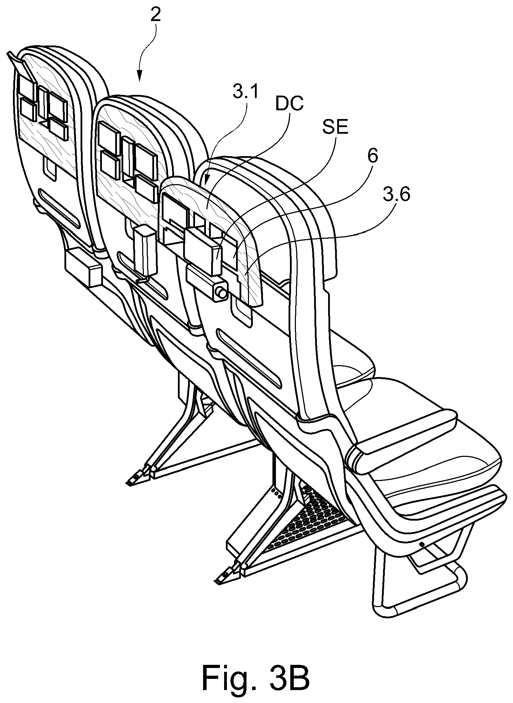

The decorative panels 3.1 to 3.n comprise each a main panel body 3.6. The main panel body 3.6 comprises at least one of a printed decorative cover DC and/or supplemental elements SE for passenger's use as shown in **figures 3A** **and** 3B. Supplemental elements SE may be bonded or incorporated into a printing process of the decorative panels 3.1 to 3.n. For example, supplemental elements SE comprise at least an information card as shown in **figure 3A** such as a safety card, an advertisement card, airline and destination information cards or the like. Further, each decorative panel 3.1 to 3.n may be configured as a carrier having a number of supplemental elements SE in form of retaining openings 6 as shown in **figure 3B** to retain loose and usable items such as amenity kits provided by the airline for the passenger.

The decorative panels 3.1 to 3.n comprise each a circumferential outer area 3.7 bent in a direction away from the main panel body 3.6. The outer area 3.7 at least partially corresponds to the outer edge 2.3 of the seatback structure 2.1.

Further, the seatback structure 2.1 comprises a support element 7 which is detachably attached to the rear side 2.2 of the seatback structure 2.1 and which is arranged extending between lateral sides 2.5 of the seatback structure 2.1. The support element 7 may be configured as a bar. The support element 7 may comprise a number of fixation elements 8 as shown in **figure 2** to additionally fix the decorative panels 3.1 to 3.n in and/or to the recess 2.4. The support element 7 is arranged on a lower or bottom side of the mounted decorative panel 3.1 to 3.n such that the decorative panel 3.1 to 3.n cannot drop or fall out of the recess 2.4 in a vertical direction. Further, the support element 7 may comprise a number of supplemental features such as storage compartments for magazines and/or outlets for mobile devices, power sockets or the like. The support element 7 may be arranged distanced from the mounted decorative panel 3.1 to 3.n at least in a center area such that there is an opening 9 provided to be used as a storage compartment, e.g. for inserting and storing items and magazines.

**Figure 2** shows in a perspective view an example of an assembly step of a seatback 2 having a decorative panel 3.1 to 3.n mounted on a rear side 2.2 of the seatback 2.

The rear side 2.2 comprises at least an attachment device 10 with at least one receiving element 5 arranged in the recess 2.4 and/or in the outer edge 2.3 of the seatback structure 2.1. The attachment device 10 is arranged on an inner circumference of the outer edge 2.3 of the seatback structure 2.1. Alternatively or additionally, an attachment device 10 is arranged in the recess 2.4 e.g. on the rear side surface 2.2.1.

The decorative panel 3.1 to 3.n comprises at least one attachment element 4 which is detachably retained in the receiving element 5 in a mounted state of the decorative panel 3.1 to 3.n at the rear side 2.2 of the seatback structure 2.1.

The seatback structure 2.1 further comprises an intermediate shell 11 arranged, e.g. detachably mounted, in and to the recess 2.4. The intermediate shell 11 is arranged between the rear side surface 2.2.1 and the decorative panel 3.1 to 3.n in the mounted state. The intermediate shell 11 may be detachably attached to and/or in the outer edge 2.3. The intermediate shell 11 may comprise additional retaining elements 12 to support and retain the decorative panel 3.1 to 3.n within the seatback recess 2.4.

**Figures 3A** **and** **3B** show in perspective views examples of a seatback 2 having different customized decorative panels 3.1 to 3.n.

## Claims

1. A seatback (2) for an aircraft seat (1), comprising a seatback structure (2.1) which has:
- a rear side (2.2) having a partially circumferential outer edge (2.3) and a recess (2.4) which is partially surrounded by the outer edge, and
- a panel (3.1) at least partially arranged within the recess and at least partially covered by the outer edge,
wherein the panel is detachably retained to and/or in the recess and is configured as an interchangeable and customized part,
wherein the outer edge is arranged on a circumference of the seatback structure and projecting substantially perpendicular away from a rear side surface (2.2.1) of the seatback structure,
wherein the panel (3.1) comprises a main panel body (3.6), and wherein the main panel body (3.6) comprises a printed cover, and
wherein the panel comprises a circumferential outer area (3.7) bent in a direction away from the main panel body (3.6), the circumferential outer area (3.7) at least partially corresponding to the outer edge (2.3) of the seatback structure (2.1).

2. The seatback according to claim 1, wherein the panel is detachably retained to and/or in the recess at least in one of a form-fitting and/or force-fitting manner.

3. The seatback according to claim 1 or 2, wherein the panel is detachably retained to and/or in the outer edge at least in one of a form-fitting and/or force-fitting manner.

4. The seatback according to any one of the preceding claims, wherein the panel comprises at least one attachment element (4) which is detachably retained in at least one of the recess and/or the outer edge.

5. The seatback according to claim 4, wherein the attachment element protrudes from an outer circumference of the panel in a direction towards the recess and/or the outer edge of the seatback structure.

6. The seatback according to any one of the preceding claims, wherein the main panel body further comprises supplemental elements for passenger's use.

7. The seatback according to any one of the preceding claims, wherein the seatback structure comprises an intermediate shell (11) arranged in the recess between a rear side surface (2.2.1) and the panel.

8. The seatback according to any one of the preceding claims, wherein the seatback structure comprises a support element (7) which is detachably attached to the rear side of the seatback structure and which is arranged extending between lateral sides of the seatback structure.

9. The seatback according to any one of the preceding claims, wherein the rear side comprises at least an attachment device (10) with at least one receiving element (5) arranged in the recess and/or in the outer edge of the seatback structure.

10. The seatback according to claim 9, wherein the attachment device is arranged on an inner circumference of the outer edge of the seatback structure.

11. The seatback according to claim 9 or 10, wherein the panel comprises at least one attachment element (4) which is detachably retained in the receiving element in a mounted state of the panel at the rear side of the seatback structure.

12. An aircraft seat, comprising at least a seat pan and a seatback according to any one of the preceding claims.

## Patentansprüche

1. Rückenlehne (2) für einen Luftfahrzeugsitz (1), umfassend eine Rückenlehnenstruktur (2.1), die aufweist:
- eine Rückseite (2.2), die eine teilweise umlaufende Außenkante (2.3) und eine Aussparung (2.4) aufweist, die teilweise von dem Außenrand umgeben ist, und
- ein Paneel (3.1), das mindestens teilweise innerhalb der Aussparung angeordnet und mindestens teilweise durch die Außenkante abgedeckt ist,
wobei das Paneel an und/oder in der Aussparung abnehmbar gehalten und als austauschbares und individuell angepasstes Teil konfiguriert ist,
wobei die Außenkante an einem Umfang der Rückenlehnenstruktur angeordnet ist und im Wesentlichen senkrecht von einer Rückseitenoberfläche (2.2.1) der Rückenlehnenstruktur wegragt,
wobei das Paneel (3.1) einen Hauptpaneelkörper (3.6) umfasst, und wobei der Hauptpaneelkörper (3.6) eine bedruckte Abdeckung umfasst, und
wobei das Paneel einen umlaufenden Außenbereich (3.7) umfasst, der in eine von dem Hauptpaneelkörper (3.6) weg weisende Richtung gebogen ist, wobei der umlaufende Außenbereich (3.7) mindestens teilweise der Außenkante (2.3) der Rückenlehnenstruktur (2.1) entspricht.

2. Rückenlehne nach Anspruch 1, wobei das Paneel an und/oder in der Aussparung in mindestens einer von einer form- und/oder kraftschlüssigen Weise abnehmbar gehalten ist.

3. Rückenlehne nach Anspruch 1 oder 2, wobei das Paneel an und/oder in der Außenkante in mindestens einer von einer form- und/oder kraftschlüssigen Weise abnehmbar gehalten ist.

4. Rückenlehne nach einem der vorstehenden Ansprüche, wobei das Paneel mindestens ein Befestigungselement (4) umfasst, das in mindestens einer der Aussparung und/oder der Außenkante abnehmbar gehalten ist.

5. Rückenlehne nach Anspruch 4, wobei das Befestigungselement von einem Außenumfang des Paneels in eine Richtung zu der Aussparung und/oder der Außenkante der Rückenlehnenstruktur hervorsteht.

6. Rückenlehne nach einem der vorstehenden Ansprüche, wobei der Hauptpaneelkörper ferner zusätzliche Elemente zur Verwendung durch den Passagier umfasst.

7. Rückenlehne nach einem der vorstehenden Ansprüche, wobei die Rückenlehnenstruktur einen Zwischenmantel (11) umfasst, der in der Aussparung zwischen einer Rückseitenoberfläche (2.2.1) und dem Paneel angeordnet ist.

8. Rückenlehne nach einem der vorstehenden Ansprüche, wobei die Rückenlehnenstruktur ein Stützelement (7) umfasst, das an der Rückseite der Rückenlehnenstruktur abnehmbar befestigt ist und das sich zwischen den seitlichen Seiten der Rückenlehnenstruktur erstreckend angeordnet ist.

9. Rückenlehne nach einem der vorstehenden Ansprüche, wobei die Rückseite mindestens eine Befestigungsvorrichtung (10) mit mindestens einem Aufnahmeelement (5) umfasst, das in der Aussparung und/oder in der Außenkante der Rückenlehnenstruktur angeordnet ist.

10. Rückenlehne nach Anspruch 9, wobei die Befestigungsvorrichtung an einem Innenumfang der Außenkante der Rückenlehnenstruktur angeordnet ist.

11. Rückenlehne nach Anspruch 9 oder 10, wobei das Paneel mindestens ein Befestigungselement (4) umfasst, das in einem gelagerten Zustand des Paneels an der Rückseite der Rückenlehnenstruktur in dem Aufnahmeelement abnehmbar gehalten ist.

12. Luftfahrzeugsitz, umfassend mindestens eine Sitzschale und eine Rückenlehne nach einem der der vorstehenden Ansprüche.

## Revendications

1. Dossier (2) de siège pour un siège (1) d'avion, comprenant une structure (2.1) de dossier de siège qui présente :
- une face arrière (2.2) présentant un bord extérieur (2.3) partiellement circonférentiel et un renfoncement (2.4) partiellement entouré par le bord extérieur et
- un panneau (3.1) au moins partiellement disposé dans le renfoncement et au moins partiellement recouvert par le bord extérieur,
dans lequel le panneau est retenu de manière détachable sur et/ou dans le renfoncement et est conçu comme une pièce interchangeable et personnalisée,
dans lequel le bord extérieur est disposé sur une circonférence de la structure de dossier et fait saillie sensiblement perpendiculairement par rapport à une surface (2.2.1) de face arrière de la structure de dossier de siège,
dans lequel le panneau (3.1) comprend un corps principal (3.6) de panneau et le corps principal (3.6) de panneau comprend un couvercle imprimé et
dans lequel le panneau comprend une zone extérieure (3.7) circonférentielle courbée dans un sens à l'opposé de corps principal (3.6) de panneau, la zone extérieure (3.7) circonférentielle correspondant au moins partiellement au bord extérieur (2.3) de la structure (2.1) de dossier.

2. Dossier de siège selon la revendication 1, dans lequel le panneau est retenu de manière détachable sur et/ou dans le renfoncement au moins de l'une des manières suivantes : par complémentarité de forme et/ou à force.

3. Dossier de siège selon la revendication 1 ou 2, le panneau étant retenu de manière détachable sur et/ou dans le bord extérieur au moins de l'une des manières suivantes : par complémentarité de forme et/ou à force.

4. Dossier de siège selon l'une quelconque des revendications précédentes, dans lequel le panneau comprend au moins un élément de fixation (4) qui est retenu de manière détachable dans au moins un élément parmi le renfoncement et/ou le bord extérieur.

5. Dossier de siège selon la revendication 4, dans lequel l'élément de fixation fait saillie à partir d'une circonférence extérieure du panneau dans un sens vers le renfoncement et/ou le bord extérieur de la structure du dossier.

6. Dossier de siège selon l'une quelconque des revendications précédentes, dans lequel le corps principal de panneau comprend en outre des éléments supplémentaires à l'usage du passager.

7. Dossier de siège selon l'une quelconque des revendications précédentes, dans lequel la structure de dossier de siège comprend une coque intermédiaire (11) disposée dans le renfoncement entre une surface (2.2.1) de face arrière et le panneau.

8. Dossier de siège selon l'une quelconque des revendications précédentes, dans lequel la structure de dossier de siège comprend un élément support (7) qui est fixé de manière détachable à la face arrière de la structure de dossier de siège et qui disposé de manière à s'étendre entre des côtés latéraux de la structure de dossier de siège.

9. Dossier de siège selon l'une quelconque des revendications précédentes, dans lequel la face arrière comprend au moins un dispositif de fixation (10) présentant au moins un élément de réception (5) disposé dans le renfoncement et/ou dans le bord extérieur de la structure de dossier de siège.

10. Dossier de siège selon la revendication 9, dans lequel le dispositif de fixation est disposé sur une circonférence intérieure du bord extérieur de la structure de dossier de siège.

11. Dossier de siège selon la revendication 9 ou 10, dans lequel le panneau comprend au moins un élément de fixation (4) qui est retenu de manière détachable dans l'élément de réception dans un état monté du panneau au niveau de la face arrière de la structure de dossier de siège.

12. Siège d'avion, comprenant au moins une assise et un dossier de siège selon l'une quelconque des revendications précédentes.
